# EUROPÄISCHE PATENTSCHRIFT

(11) **EP 0 346 570 B1**
(45) Veröffentlichungstag und Bekanntmachung des Hinweises auf die Patenterteilung: **19.05.1993**
(21) Anmeldenummer: 89104054.5
(22) Anmeldetag: 08.03.1989
(51) Int. Cl.: C04B 41/88, C03C 17/27

(54) **Photopolymerisierbare Lüsterfarbe**
Photopolymerizable lustre ink
Encre lustrée polymérisable

(30) Priorität: 07.06.1988 DE 3819413
(43) Veröffentlichungstag der Anmeldung: 20.12.1989
(73) Patentinhaber: W.C. Heraeus GmbH, D-63405 Hanau (DE)
(72) Erfinder: Landgraf, Günter, Dr., D-6450 Hanau (DE); Wild, Wolfgang, D-6450 Hanau (DE)
(74) Vertreter: Kühn, Hans-Christian

(56) Entgegenhaltungen:
- EP-A- 0 106 628
- DE-A- 3 048 823
- DE-B- 1 286 866
- US-A- 3 772 062
- US-A- 4 336 349

## Beschreibung

Die Erfindung betrifft eine Lüsterfarbe für die Dekoration von Glas, Keramik und Porzellan aus löslicher organischer Metallverbindung und organischem Träger.

Lüsterfarben für die Dekoration von Glas, Keramik und Porzellan bestehen aus Lösungen von organischen Metallverbindungen in organischen Träger-Medien, die beim Brand restlos verbrennen oder verdampfen. Nach dem Einbrennen erscheinen sie auf dem damit dekorierten Gegenstand als sehr dünne, glänzende, irisierende Schichten. Verbindungen von Übergangsmetallen führen zu farbigen Lüstern. So ergeben Eisen-Lüster hellbraunrote bis goldfarbig schimmernde Überzüge, Kupfer-Lüster rötlichbraune Töne, Nickel-Lüster ein schimmerndes Hellbraun, Mangan-Lüster ein Graubraun und Uran-Lüster eine grünlichgelbe Färbung. Eine Reihe von Lüsterfarben läßt sich in interessanten Nuancen durch Zumischen von Glanzgold-Lösung zu verschiedenen Metall-Lüsterfarben erhalten. Gold- und Platin-Lüsterfarben liefern dem Glanzgold und dem Glanzplatin ähnliche Dekorationen, enthalten jedoch weniger als 6 % Edelmetall.

Die Lüsterfarben enthalten die organischen Metallverbindungen häufig in Form der Metallresinate und -sulforesinate. Andere für diesen Zweck bekannte Verbindungen sind zum Beispiel Goldmercaptide (deutsche Patentschriften 1 286 866 und 1 298 828), Koordinationsverbindungen aus Palladium(II)-salzen und Thioäthern (deutsche Patentschrift 1 293 514), carbonsaure Metallsalze und Metallcarbonyle und -acetylacetonate (deutsche Patentschrift 21 08 849).

Die organischen Metallverbindungen können zum Beispiel solche von Magnesium, Aluminium, Indium, Wismut, Kupfer, Zink, Titan, Zirkonium, Vanadin, Chrom, Wolfram, Mangan, Eisen, Kobalt, Nickel, Yttrium, Cer und Thorium sein (deutsche Patentschrift 22 33 594). Als organische Edelmetallverbindungen werden meist die von Gold, Platin und Palladium eingesetzt. Die Lüsterfarben können ein, zwei oder mehrere dieser Metallverbindungen enthalten.

Zu typischen organischen Trägern gehören nach der deutschen Patentschrift 1 286 866 Gemische von zwei oder mehreren der folgenden Bestandteile: Methyläthylketon, Cyclohexanon, Äthylacetat, Amylacetat, Cellosolve (Äthylenglykoläther), Butanol, Nitrobenzol, Toluol, Xylol, Petroläther, Chloroform, Tetrachlorkohlenstoff, verschiedene Terpene, wie Pinen, Dipenten, Dipentenoxid und dergleichen, ätherische Öle, wie Lavendelöl, Rosmarinöl, Anisöl, Sassafrasöl, Wintergrünöl, Fenchelöl und Terpentinöl, assyrischer Asphalt, verschiedene Kiefernharze und Balsame sowie Kunstharze.

Als Lösungsmittel für zum Beispiel Metallcarbonyle und -acetylacetonate werden halogenierte Kohlenwasserstoffe oder Alkohole verwendet; die Konzentration der Metallverbindungen darin beträgt etwa 0,01 - 5 % (deutsche Patentschrift 21 08 849).

Solche organischen Träger werden nicht nur in Lüsterfarben, sondern allgemein für keramische Farben verwendet. Um die sich daraus ergebenden Nachteile (mögliche Gesundheitsschädigungen durch verdampfende Lösungsmittel, Lösungsmitteldämpfe in der Abluft, energie- und zeitaufwendiges Trocknen) zu vermeiden, sind bereits lösungsmittelfreie, durch Photopolymerisation auszuhärtende organische Träger vorgeschlagen worden.

So ist zum Beispiel aus der deutschen Offenlegungsschrift 30 48 823 eine mit UV-Strahlung härtbare Harzmasse bekannt, die zusammen mit Platin, Palladium, Gold, Goldchlorid, Kobaltoxid, Selenrot oder anderen anorganischen Pigmenten als Druckfarbe zur Herstellung der Bildschicht von Abziehbildern für die Dekoration von Töpferwaren geeignet ist. Diese Harzmasse besteht aus gesättigtem Copolyester, polymerisierbarer Verbindung und Photosensibilisator. Geeignete polymerisierbare Verbindungen sind zum Beispiel Styrolverbindungen und Ester der Acrylsäure und Methacrylsäure mit ein-, zwei- und höherwertigen Alkoholen (Alkylacrylate und -methacrylate, Urethanacrylate und -methacrylate, Epoxyacrylate und -methacrylate, Oligoesteracrylate und -methacrylate u.a.). Als Photosensibilisatoren werden unter anderem Benzoin, Benzophenon, Anthrachinon, Xanthon, Thioxanthon und Derivate dieser Verbindungen, gegebenenfalls im Gemisch mit zum Beispiel Aminen, genannt.

In der europäischen Patentanmeldung 106 628 wird ein Verfahren zum Dekorieren von Glas und Keramik - entweder direkt oder über ein Abziehbild - unter Verwendung einer durch Bestrahlung auszuhärtenden und danach einzubrennenden Paste, die neben der Dekorationsfarbe als organischen Träger ein Gemisch aus gesättigtem thermoplastischem Harz, durch Bestrahlung auszuhärtendem, als Lösungsmittel für das Harz wirkendem Verdünnungsmittel und einem Photoinitiator enthält, beschrieben. Das Verdünnungsmittel kann beispielsweise Vinylpyrrolidon, Isobornylacrylat, Hexandioldiacrylat, Triäthylenglykoldiacrylat, Tripropylenglykoldiacrylat, Trimethylolpropantriacrylat und Pentaerythrittriacrylat sein. Als Photoinitiator eignen sich besonders Carbonylverbindungen, wie Ketone und ihre Derivate, zum Beispiel Methyläthylketon, Benzophenon und Benzildimethylketal. Die Dekorationsfarbe kann ein feinteiliges Metall oder eine keramische Farbe aus Pigment und Glasfluß sein und ist in einer Menge von 40 - 85 Gewichts-% in der Paste enthalten.

Die US-Patentschrift 4 337 289 bezieht sich auf ein Abziehbild, dessen Bildschicht aus einem flüssigen photopolymerisierbaren Medium, das - sollen Keramik, Glas und ähnliches damit dekoriert werden - keramische Farben, Glasurfritten oder anorganische Pigmente enthält, hergestellt wird. Das photopolymerisierbare Medium besteht hauptsächlich aus ungesättigten Monomeren und Acryloyl- oder Methacryloylgruppen enthaltenden Präpolymeren (Molekurlargewicht 250 - 5000), wie acrylierte Urethane, Polyepoxide, Polyäther und Polyester.

Die US-Patentschrift 4 649 062 betrifft einen durch UV-Bestrahlung härtbaren organischen Träger für keramische Farben, der neben flüssigen Oligomeren mit endständigen Acrylat- oder Methacrylat-Gruppen und monomeren Acrylaten und Methacrylaten ein Photoinitiator-System aus einem Acetophenon, einem Thioxanthon und einem Amin und einen Polymerisationsinhibitor enthält.

In der deutschen Patentschrift 20 15 833 wird ein Verfahren zur Herstellung von lötbaren Edelmetallmustern hoher Auflösung auf anorganischen dielektrischen Unterlagen beschrieben. Die Edelmetallmuster werden unter Verwendung eines photopolymerisierbaren Materials, das organisches Lösungsmittel und, darin gelöst, organische Edelmetallverbindung, photopolymerisierbare Verbindung, Sensibilisator und gegebenenfalls ein Flußmittel enthält, hergestellt. Beispiele für die Edelmetallverbindung sind Edelmetallresinate und -mercaptide, für die photopolymerisierbare Verbindung Trimethyloläthantrimethacrylat, Äthylenglykoldimethacrylat, Triäthylenglykoldimethacrylat und Äthylendiacrylat und Mischungen daraus und für den Sensibilisator tert.-Butylanthrachinon und Benzoinmethyläther.

Es ist die Aufgabe der Erfindung, eine Lüsterfarbe für die Dekoration von Glas, Keramik und Porzellan aus löslicher organischer Metallverbindung und organischem Träger zu finden, die keine Lösungsmittel enthält, in allen Üblichen Auftragsarten auf damit zu dekorierende Gegenstände beziehungsweise als Bildschicht auf Abziehbild-Trägerpapier aufgebracht und zu hochglänzenden, irisierenden, haftfesten und fehlerfreien dünnen Schichten gebrannt werden kann.

Die die Lösung der Aufgabe darstellende Lüsterfarbe ist dadurch gekennzeichnet, daß sie aus
a) 0,01 - 10 Gewichts-% Metall als organische Metallverbindung,
b) 10 - 70 Gewichts-% Isobornylacrylat und/oder Dicyclopentadienylacrylat,
c) 0 - 30 Gewichts-% Isobornylmethacrylat, Dicyclopentadienylmethacrylat, 2-Äthylhexylacrylat, 2-Äthylhexylmethacrylat und/oder N-Vinylpyrrolldon,
d) 0 - 30 Gewichts-% Oligomer mit Acrylat- und/oder Methacrylat-Gruppen,
e) 2 - 20 Gewichts-% Photoinitiator und
f) 0 - 30 Gewichts-% Natur- und/oder Kunstharz
besteht.

Die gegebenenfalls in der Lüsterfarbe enthaltenen Oligomeren mit Acrylat- und/oder Methacrylat-Gruppen dienen zur Erhöhung der Viskosität. Geeignete Oligomere sind beispielsweise die in den US-Patentschrlften 4 337 289 und 4 649 062 beschriebenen. Besonders bewährt haben sich oligomere Polyurethane, Polyepoxide und Polyester mit Acrylat- und/oder Methacrylat-Gruppen.

Für die Lüsterfarbe geeignete Photoinitiatoren sind bekannt. Bevorzugt werden Ketone und ihre Derivate, wie Acetophenone, Benzoinäther, Benzilketale, Ketoximester und Thioxanthone.

In der Lüsterfarbe können als weitere Bestandteile noch Naturharze, geschwefelte Naturharze und/oder synthetische Harze, zum Beispiel Abietinsäure, Dammarharz, Kolophonium, modifizierte Kolophoniumharze, Celluloseäther und -ester und Phenolharze, zur Viskositätseinstellung und Modifizierung der anwendungstechnischen Eigenschaften, Additive, wie Entschäumer, Netzmittel und Farbstoffe, und geringe Mengen an Lösungsmitteln zur Erniedrigung der Viskosität enthalten sein.

Die erfindungsgemäße Lüsterfarbe zeichnet sich durch eine sehr gute Löslichkeit der organischen Metallverbindungen in Isobornylacrylat und Dicyclopentadienylacrylat und eine sehr gute Verträglichkeit der Metallverbindungen mit den Monomeren und Oligomeren aus.

Auf den zu dekorierenden Gegenstand oder als Bildschicht auf einen Abziehbild-Träger aufgebracht, erhärtet sie bei Bestrahlung mit UV-Licht sehr schnell - üblicherweise in 1 - 3 Sekunden - unter Bildung nichtklebriger, trockener und haftfester Filme aus. Weitere keramische Präparate können sofort nach dem Aushärten auf die Filme, ohne sie zu beschädigen, aufgebracht werden.

Nach dem Aushärten ist beim Handhaben der zu dekorierenden Gegenstände und der Abziehbilder keine besondere Vorsicht vonnöten.

Beim Brennen zersetzen sich die bei der Bestrahlung der Lüsterfarbe durch Photopolymerisation gebildeten Polymeren und die homogen darin verteilten organischen Metallverbindungen ohne jede Störung.

Zur näheren Erläuterung werden in den folgenden Beispielen Lüsterfarben gemäß der Erfindung und die Herstellung von auf Porzellan und Glas eingebranntem Lüster unter Verwendung dieser Farben beschrieben.

### Beispiel 1

| Lüsterfarbe für den Siebdruck | |
|---|---|
| Wismutäthylhexanoat, 20 % Bi | 3 % |
| Eisenoctanoat, 10 % Fe | 4 % |
| Isobornylacrylat | 65 % |
| aliphatisches Urethanacrylat, Mol.-Gewicht ca. 5000 | 12 % |
| Äthylcellulose N 100 (Hercules) | 6 % |
| Benzildimethylketal (Irgacure 651, Ciba Geigy) | 10 % |

Die pastenförmige Lüsterfarbe wird durch ein aus Polyestergewebe, Faserstärke T, bestehendes Sieb mit 130 Maschen/cm auf eine Keramik-Fliese aufgedruckt und anschließend durch eine Sekunde langes Bestrahlen mit einer Quecksilber-Hochdrucklampe (80 W/cm) zu einem nichtklebrigen Film ausgehärtet. Beim Einbrennen bei 780 °C entsteht ein gelbbrauner Lüster.

### Beispiel 2

| Lüsterfarbe für das Auftragen mit dem Pinsel | |
|---|---|
| Gold-tert.-dodecylmercaptid | |
| als Lösung in Isobornylacrylat, 10 % Au | 2 % |
| Wismutäthylhexanoat, 20 % Bi | 4 % |
| Isobornylacrylat | 68 % |
| Dammarharz | 16 % |
| Äthylcellulose N 100 (Hercules) | 6 % |
| 1-Phenyl-2-hydroxy-2-methylpropanon (Darocure 1174, Merck) | 10 % |

Die Lüsterfarbe wird mit dem Pinsel in dünner Schicht auf einen Porzellanteller aufgetragen und durch 2 Sekunden langes Bestrahlen mit einer Quecksilber-Hochdrucklampe (80 W/cm) zu einem glänzenden, nichtklebrigen Film ausgehärtet. Beim Einbrennen bei 800 °C entsteht ein lilafarbener, hochglänzender, irisierender Lüster.

### Beispiel 3

| Lüsterfarbe für den Siebdruck | |
|---|---|
| Tetrabutylorthotitanat, 14 % Ti | 6 % |
| Dicyclopentadienylacrylat | 66 % |
| hydriertes Rizinusöl | 2 % |
| Alkylphenolharz (Bakelite LA 748) | 15 % |
| 1-(4-Isopropylphenyl)-2-hydroxy-2-methylpropanon (Darocure 1116, Merck) | 10 % |
| Silicon-Entschäumer | 1 % |

Die pastenförmige Lüsterfarbe wird durch ein aus Polyestergewebe, Faserstärke T, bestehendes Sieb mit 130 Maschen/cm auf eine Keramikfliese aufgedruckt und durch 3 Sekunden langes Bestrahlen mit einer Quecksilber-Hochdrucklampe (80 W/cm) ausgehärtet. Durch Einbrennen bei 780 °C entsteht ein weiß-irisierender, stark spiegelnder Lüster.

## Patentansprüche

1. Lüsterfarbe für die Dekoration von Glas, Keramik und Porzellan aus löslicher organischer Metallverbindung und organischem Träger, dadurch gekennzeichnet, daß sie aus
a) 0,01 - 10 Gewichts-% Metall als organische Metallverbindung,
b) 10 - 70 Gewichts-% Isobornylacrylat und/oder Dicyclopentadienylacrylat,
c) 0 - 30 Gewichts-% Isobornylmethacrylat, Dicyclopentadienylmethacrylat, 2-Äthylhexylacrylat, 2-Äthylhexylmethacrylat und/oder N-Vinylpyrrolidon,
d) 0 - 30 Gewichts-% Oligomer mit Acrylat- und/oder Methacrylat-Gruppen,
e) 2 - 20 Gewichts-% Photoinitiator und
f) 0 - 30 Gewichts-% Natur- und/oder Kunstharz.
besteht.

2. Lüsterfarbe nach Anspruch 1, dadurch gekennzeichnet, daß das Oligomer ein Polyurethan, Epoxidharz und/oder Polyester mit Acrylat- und/oder Methacrylat-Gruppen ist.

## Claims

1. Luster paint for the decoration of glass, ceramic and porcelain, comprising a soluble organic metal compound and an organic carrier, characterised in that it consists of
a) 0.01 - 10% by weight of metal as an organic metal compound,
b) 10 - 70% by weight of isobornyl acrylate and/or dicyclopentadienyl acrylate,
c) 0 - 30% by weight of isobornyl methacrylate, dicyclopentadienyl methacrylate, 2-ethylhexyl acrylate, 2-ethylhexyl methacrylate and/or N-vinylpyrrolidone,
d) 0 - 30% by weight of an oligomer having acrylate and/or methacrylate groups,
e) 2 - 20% by weight of a photoinitiator and
f) 0 - 30% by weight of a natural and/or synthetic resin.

2. Luster paint according to Claim 1, characterised in that the oligomer is a polyurethane, epoxy resin and/or polyester having acrylate and/or methacrylate groups.

## Revendications

1. Encre lustrée consistant en un composé métallique organique soluble et un support organique, Pour la décoration du verte, de la céramique et de la porcelaine, caractérisée en ce qu'elle consiste en
a) 0,01-10 % en poids de métal sous forme de composé métallique organique,
b) 10-70 % en poids d'acrylate d'isobornyle et/ou d'acrylate de dicyclopentadiényle,
c) 0-30 % en poids de méthacrylate d'isobornyle, de méthacrylate de dicyclopentadiényle, d'acrylate de 2-éthylhexyle, de méthacrylate de 2-éthylhexyle et/ou de N-vinylpyrtolidone,
d) 0-30 % en poids d'oligomère à groupes acrylates et/ou méthacrylates
e) 2-20 % en poids de photoinducteur et
f) 0-30 % en poids de résine naturelle et/ou de résine synthétique.

2. Encre lustrée selon la revendication 1, caractérisée en ce que l'oligomère est un polyuréthanne, une résine époxydique et/ou un polyester à groupes acrylates et/ou méthacrylates.
